# EUROPEAN PATENT APPLICATION

(11) **EP 3 267 389 A1**
(43) Date of publication of application: **10.01.2018**
(21) Application number: 17180212.7
(22) Date of filing: 07.07.2017
(51) Int. Cl.: G06Q 30/06, G06Q 30/02, G06Q 50/00

(54) **METHOD AND APPARATUS FOR SELECTING A NETWORK RESOURCE AS A SOURCE OF CONTENT FOR A RECOMMENDATION SYSTEM**

(30) Priority: 07.07.2016 RU 2016127446; 26.05.2017 US 201715606326
(71) Applicant: Yandex Europe AG, 6005 Luzern (CH)
(72) Inventor: Lamburt, Victor Grigorievich, Moscow 117465 (RU); Lifar, Igor Igorevich, Novorossiysk, Krasnodar region 353960 (RU)
(74) Representative: Vossius, Corinna

(57) **Abstract**

There are disclosed a method of and a system for selecting a network resource as a source of a content item, the content item to be analyzed by a recommendation system as part of a plurality of content items to generate a set of recommended content items as a recommendation for a given user of the recommendation system, the given user being a given one from a plurality of users. The method comprises, for a network resource, receiving, by the server, a plurality of features associated with a network resource to be processed; generating given network resource profile for the network resource, the given network resource profile being based on the plurality of features; executing a machine learning algorithm in order to determine a source suitability parameter for the network resource, selecting at least one content item from the network resource if the source suitability parameter is determined to be above a pre-determined threshold.

## Description

### FIELD

The present technology relates to recommendation systems in general and specifically to a method and apparatus for selecting a network resource as a source of content for a recommendation system.

### BACKGROUND

Recommendation systems are configured to identify content items of potential interest to a user from a much larger pool of content, based on explicit or implicit interests of the user, and to deliver these content items, as recommended content items, to electronic devices associated with the user, such as televisions, personal computers, laptops, smart phones, tablets, etc. The recommended content items can be delivered with or without receiving an express request from the electronic device.

Due to the vast amount of available content, recommendation systems can help to sieve through less relevant content to help a user to identify content of interest. Content is available through various global or local communication networks (the Internet, the World Wide Web, local area networks and the like) and includes information relating to different topics, such as but not limited to, news and current affairs, maps, company information, financial information and resources, traffic information, games and entertainment related information. Users use a variety of client devices (e.g. desktop computers, laptop, notebook, smartphone, tablets and the like) to have access to rich content (like images, audio, video, animation, and other multimedia content from such networks).

Some known recommendation systems are configured to provide a specific type of content to electronic devices. For example, audio content recommendation systems, such as Spotify™, provide access to a large pool of audio-type content items (e.g. digital audio files) which are categorized by genres, as well as through recommended content items based on past user selection activity.

Video content recommendation systems, for example Netflix™, provide access to a large pool of video-type content (such as digital video files of movies and television shows) that is also categorized based on genres, as well as through recommended content items based on past user selection history.

Another example of a single-content-type recommendation system is disclosed in EP2252050 B1, filed on May 13, 2009, which is a method and system for recommending local and remote content such that users, by means of television apparatuses, are enabled to overview local and remote video content thereby enhancing their television experience.

However, other known content recommendation systems are configured to recommend different types of content at the same time to users subscribed thereto. For example, a FLIPBOARD™ recommendation system aggregates and recommends different media content from various networked resources, as recommended content on the device of the user even though the user may not have expressly expressed their desire in the particular content. The recommended content is presented as electronic pages in a "magazine style" format on a screen of the device of a user, where the user can "flip" through the pages electronically. The recommended content is collected from social media, social-networking feeds, feeds from websites that have partnered with the company, and other websites

Multi-content-type recommendation systems, such as the FLIPBOARD recommendation system, have a much larger pool of content from many different network resources from which to identify the recommended content, in comparison to the single-content-type recommendation systems.

One limitation with existing recommendation systems (be it single-content-type or multi-content-type) having a content recommendation server with a given processing capacity is that in order to scale-up and provide content to increasing numbers of devices associated with increasing numbers of subscribers to the recommendation system, a compromise must be made between the time required to provide the content recommendation to each of the devices, and the necessity to increase processing capacity at the server.

Also, it goes without saying that the scale-up should not compromise the relevancy of the recommended content. The provision of content of less than satisfactory relevancy can in fact burden search systems by encouraging users to conduct their own searches.

This problem is exasperated when different content recommendations need to be provided to different devices associated with different users at substantially the same time.

### SUMMARY

It is an object of the present technology to ameliorate at least some of the inconveniences present in the prior art.

Embodiments of the present technology have been developed based on developers' appreciation that selection of the recommended content from the vast pool of content, using for example machine learning algorithms, is very computer processing resource consuming. However, the recommendation system needs to output content recommendations relatively fast, such as when a given user of the recommendation system requests the content recommendation. Developers of the present technology have realized that it may be desirable to move certain tasks of the recommendation system from run time to off line, i.e. to execute them before the given user of the recommendation system has requested the content recommendation.

Another limitation with existing systems having a content recommendation server with a given processing capability is that in order to aggregate content for further recommendation, the content recommendation server needs to access a plethora of network resources in order to uncover content that users of the recommendation service might find relevant. Selection of network resources to be accessed for uncovering content influences, not only the pool size of content for potential recommendations, but also relevance of content that will be recommended to the users. As such, conventional recommendation services must make a compromise between (i) aggregating content from a larger number of network resources, which results in a resource-expensive aggregation of a massive pool of uncovered content to be further categorized for each user by the server having limited processing capabilities, and (ii) aggregating content from a smaller number of network resources, which results in a pool of uncovered content that might not include sufficiently relevant content for each user.

Developers of the present technology have further appreciated that the volume of potential sources of content recommendations are large. Analyzing all potential sources of content recommendations can take a considerable time and require considerable computing resources. This is particularly true when providing content recommendation to a plurality of devices of users having different content interest, at substantially the same time. Thus, developers of the present technology have set out to develop a method and a system that pre-qualifies potential sources of content recommendations according to various aspects and embodiments of the present disclosure.

In order to generate ranked search results in a search engine system or a list of recommended resources in a recommendation system, present embodiments utilize a machine learning algorithm to select search results and/or recommended content. Several machine learning algorithms may be utilized. A machine learning algorithm is first "trained" using a training set (whether marked or unmarked) to generate a machine learning algorithm formula, which is then applied to determine at run time an output based on the system inputs.

The so-trained machine learning algorithm of the recommendation system selects a number of potential recommended items from a number of potential sources for the recommended items. The machine learning algorithm associated with such a recommendation system, acquires (over time) knowledge about various potential sources of content items, past-user interactions with the various potential sources of content items (as well as generated recommendations) and uses this knowledge to generate a recommendation for a particular user of the recommendation system

Other embodiments of the present technology aim at developing sources of content recommendations for the given user of the recommendation system. These embodiments analyze user-specific sources of content recommendations (those sources that the given user has interacted in the past) and enrich them with content sources that the given user may not have interacted with in the past. Thus, some embodiments of the present technology enable the recommendation system to mix content recommendation from known sources for the given user and unknown sources, thus enabling the recommendation system to "discover" new sources of recommended content for the given user.

According to one broad aspect of the present technology, there is provided a method of selecting a network resource as a source of a content item, the content item to be analyzed by a recommendation system as part of a plurality of content items to generate a set of recommended content items as a recommendation for a given user of the recommendation system. The given user can be a given one from a plurality of users. The recommendation system is executed at a server coupled to a communication network. The method comprises: acquiring, by the server, an indication of the network resource; receiving, by the server, a plurality of features associated with the network resource; generating, by the server, a given network resource profile for the network resource, the given network resource profile being based on the plurality of features; executing, by the server, a machine learning algorithm in order to, based on the given network resource profile, determine a source suitability parameter for the network resource, the source suitability parameter being indicative of the network resource being susceptible to publishing the content item that can be processed by the recommendation system, selecting at least one content item from the network resource if the source suitability parameter is determined to be above a pre-determined threshold, the at least one content item for submitting to the recommendation system for processing.

In some embodiments of the method, the machine learning algorithm having been trained, prior to said acquiring, to determine the source suitability parameter based on training web site profiles generated with an associated plurality of training features at least some of which are of a same category as the plurality of features.

In some embodiments of the method, plurality of features includes at least an absolute feature and a relative feature.

In some embodiments of the method, the absolute feature and the relative feature are base features and wherein the method further comprises: generating at least one derivative feature based on at least one of the absolute feature and the relative feature; and wherein the given web site profile is further based on the at least one derivative feature.

In some embodiments of the method, the plurality of features includes an indication of a proportion of visit sources to the network resource.

In some embodiments of the method, the plurality of features includes at least one relative feature selected from: hits per visit (HPV); sessions per visit (SPV); dated-pages per visit (DPV); home page per visit (MPV); time spent on the network resource (MTIME); last domain per session (LPS); first domain per session (FPS); hits per session (HPS); visits per user (VPU); hits per user (HPU); sessions per user (SPU); dated-pages per hit (DPH); home pages per hit (MPH); and an indication of a visit source being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

In some embodiments of the method, the plurality of features includes at least one of: a number of users visiting the network resource per time interval, number of visits per time interval, number of transitions within various web pages within the network resource per time interval, and a number of unique sessions with the network resource per time interval.

In some embodiments of the method, the plurality of features is a subset of all possible features, the method further comprising executing a feature selection to define the subset.

In some embodiments of the method, the subset of all possible features consists of: at least one of: a proportion of a landing page of the network resource visits within an initial transition to the network resource within a session and a proportion of the landing page visits during transitions within the network resource; at least one of: a proportion of a web page associated with an URL containing a date being a first page visited within the initial transition to the network resource and a proportion of the web pages within the network resource visited during the session, the web pages being associated with an URL containing a date; a proportionate profile of visit sources for the network resource, the visit sources being selected from: search engine/social networks/mail and messenger application/URL condensers/direct visits; a proportion of session where the network resource was last in the session.

In some embodiments of the method, the source suitability parameter is one of a suitable and non-suitable.

In some embodiments of the method, the source suitability parameter is determined using at least one of: a logistical regression analysis; naive Bayes algorithm; k-nearest neighbor algorithm; random forest algorithm; and hard voting algorithm.

In some embodiments of the method, said selecting is executed in response to a request from the given user for a recommendation.

In accordance with another broad aspect of the present technology, there is provided a server. The server comprises: a data storage medium; a network interface configured for communication over a communication network; a processor operationally coupled to the data storage medium and the network interface, the processor being configured to: acquire an indication of the network resource, the network resource to be processed to determine its suitability as a source of a content item, the content item to be analyzed by a recommendation system as part of a plurality of content items to generate a set of recommended content items as a recommendation for a given user of the recommendation system; receive a plurality of features associated with the network resource; generate a given network resource profile for the network resource, the given network resource profile being based on the plurality of features; execute a machine learning algorithm in order to, based on the given network resource profile, determine a source suitability parameter for the network resource, the source suitability parameter being indicative of the network resource being susceptible to publishing the content item that can be processed by the recommendation system, and select at least one content item from the network resource if the source suitability parameter is determined to be above a pre-determined threshold, the at least one content item for submitting to the recommendation system for processing. The given user can be a given one of a plurality of users.

In some embodiments of the server, the machine learning algorithm has been trained, prior to said acquiring, to determine the source suitability parameter based on training web site profiles generated with an associated plurality of training features at least some of which are of a same category as the plurality of features.

In some embodiments of the server, the plurality of features includes at least an absolute feature and a relative feature.

In some embodiments of the server, the absolute feature and the relative feature are base features and wherein the processor is further configured to: generate at least one derivative feature based on at least one of the absolute feature and the relative feature; and wherein the given web site profile is further based on the at least one derivative feature.

In some embodiments of the server, the plurality of features includes an indication of a proportion of visit sources to the network resource.

In some embodiments of the server, the plurality of features includes at least one relative feature selected from: hits per visit (HPV); sessions per visit (SPV); dated-pages per visit (DPV); home page per visit (MPV); time spent on the network resource (MTIME); last domain per session (LPS); first domain per session (FPS); hits per session (HPS); visits per user (VPU); hits per user (HPU); sessions per user (SPU); dated-pages per hit (DPH); home pages per hit (MPH); and an indication of a visit source being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

In some embodiments of the server, the plurality of features includes at least one of: a number of users visiting the network resource per time interval, number of visits per time interval, number of transitions within various web pages within the network resource per time interval, and a number of unique sessions with the network resource per time interval.

In some embodiments of the server, the plurality of features is a subset of all possible features, the method further comprising executing a feature selection to define the subset.

In some embodiments of the server, the subset of all possible features consists of: at least one of: a proportion of a landing page of the network resource visits within an initial transition to the network resource within a session and a proportion of the landing page visits during transitions within the network resource; at least one of: a proportion of a web page associated with an URL containing a date being a first page visited within the initial transition to the network resource and a proportion of the web pages within the network resource visited during the session, the web pages being associated with an URL containing a date; a proportionate profile of visit sources for the network resource, the visit sources being selected from: search engine/social networks/mail and messenger application/URL condensers/direct visits; a proportion of session where the network resource was last in the session.

In some embodiments of the server, the source suitability parameter is one of a suitable and non-suitable.

In some embodiments of the server, the source suitability parameter is determined using at least one of: a logistical regression analysis; naive Bayes algorithm; k-nearest neighbor algorithm; random forest algorithm; and hard voting algorithm.

In some embodiments of the server, the processor executes the selecting in response to a request from the given user for a recommendation.

In accordance with yet another broad aspect of the present technology, there is provided a computer-implemented method of generating a content recommendation for a user of an electronic device. The user can be one user from a plurality of users associated with a plurality of electronic devices. The method is executable by a recommendation server accessible by the electronic device via a communication network, the content recommendation being associated with a content item available at one of a plurality of network resources accessible via the communication network. The method comprises: receiving, from the electronic device, a request for the content recommendation, the content recommendation including at least one recommended content item; executing a first machine learning algorithm module in order to determine a sub-set of recommended content sources from a plurality of possible content sources, the determining the sub-set of recommended content sources including: acquiring an indication of user-past-interactions with at least one of: (i) the recommendation system and (ii) at least some of the plurality of network resources; based on the user-past-interactions, determining a first sub-set of user-specific content sources; based on (i) a machine learning algorithm trained formula of other user interactions with at least some others of the plurality of network resources and at least one of: (ii) the first sub-set of user-specific content sources; and (iii) a user-profile-vector generated based on the user-past-interactions, generating a second sub-set of user-non-specific content sources; processing the first sub-set of user specific content sources and the second sub-set of user-non-specific content sources in order to generate the sub-set of recommended content sources; analyzing the sub-set of recommended content sources to select a plurality of potentially-recommendable content items; executing a second machine learning algorithm module in order to select, from the plurality of potentially-recommendable content items, at least one recommended content item; the selection being made on the basis of the user-profile-vector.

In some embodiments of the method, the determining the first sub-set of user-specific content sources comprises applying an SVD algorithm.

In some embodiments of the method, the determining the first sub-set of user-specific content sources is based on: (i) the machine learning algorithm trained formula of other user interactions with at least some others of the plurality of network resources; and (ii) the user-profile-vector generated based on the user-past-interactions.

In some embodiments of the method, the method further comprises, prior to the receiving the request for the content recommendation, generating by the SVD algorithm a matrix of network resources events and users.

In some embodiments of the method, the determining the first sub-set of user-specific content sources comprises applying a PMI algorithm.

In some embodiments of the method, the determining the first sub-set of user-specific content sources is based on: (i) the machine learning algorithm trained formula of other user interactions with at least some others of the plurality of network resources; and (ii) the first sub-set of user-specific content sources.

In some embodiments of the method, the selection from the sub-set of recommended content sources the plurality of potentially-recommendable content items comprises determining a pre-defined number of most recent content items.

In some embodiments of the method, the selection from the sub-set of recommended content sources the plurality of potentially-recommendable content items comprises determining a pre-defined number of most popular content items.

In some embodiments of the method, the selection from the sub-set of recommended content sources is specific to a geographic region where the request for content recommendation was executed from.

In some embodiments of the method, the method further comprises filtering the selected potentially-recommendable content items.

In some embodiments of the method, the filtering is based on a language setting of the electronic device and a language setting of the content item.

In accordance with another broad aspect of the present technology, there is provided a server. The server comprises: a data storage medium; a network interface configured for communication over a communication network; a processor operationally coupled to the data storage medium and the network interface, the processor configured to: receive, from an electronic device that can be one electronic device of a plurality of electronic devices, a request for the content recommendation, the content recommendation including at least one recommended content item; the content recommendation being associated with a content item available at one of a plurality of network resources accessible via the communication network: execute a first machine learning algorithm module in order to determine a sub-set of recommended content sources from a plurality of possible content sources, the determining the sub-set of recommended content sources including: acquiring an indication of user-past-interactions with at least one of: (i) the recommendation system and (ii) at least some of the plurality of network resources; based on the user-past-interactions, determining a first sub-set of user-specific content sources; based on (i) a machine learning algorithm trained formula of other user interactions with at least some others of the plurality of network resources and at least one of: (ii) the first sub-set of user-specific content sources; and (iii) a user-profile-vector generated based on the user-past-interactions, generating a second sub-set of user-non-specific content sources; processing the first sub-set of user specific content sources and the second sub-set of user-non-specific content sources in order to generate the sub-set of recommended content sources; analyze the sub-set of recommended content sources to select a plurality of potentially-recommendable content items; execute a second machine learning algorithm module in order to select, from the plurality of potentially-recommendable content items, at least one recommended content item; the selection being made on the basis of the user-profile-vector.

In some embodiments of the server, to determine the first sub-set of user-specific content sources, the processor is configured to apply an SVD algorithm.

In some embodiments of the server, the determining the first sub-set of user-specific content sources is based on: (i) the machine learning algorithm trained formula of other user interactions with at least some others of the plurality of network resources; and (ii) the user-profile-vector generated based on the user-past-interactions.

In some embodiments of the server, the server is further configured, prior to the receiving the request for the content recommendation, to generate, suing the SVD algorithm, a matrix of network resources events and users.

In some embodiments of the server, to determine the first sub-set of user-specific content sources, the processor is configured to apply a PMI algorithm.

In some embodiments of the server, the determining the first sub-set of user-specific content sources is based on: (i) the machine learning algorithm trained formula of other user interactions with at least some others of the plurality of network resources; and (ii) the first sub-set of user-specific content sources.

In some embodiments of the server, the selection from the sub-set of recommended content sources the plurality of potentially-recommendable content items comprises determining a pre-defined number of most recent content items.

In some embodiments of the server, the selection from the sub-set of recommended content sources the plurality of potentially-recommendable content items comprises determining a pre-defined number of most popular content items.

In some embodiments of the server, the selection from the sub-set of recommended content sources is specific to a geographic region where the request for content recommendation was executed from.

In some embodiments of the server, the processor is further configured to filter the selected potentially-recommendable content items.

In some embodiments of the server, the filtering is based on a language setting of the electronic device and a language setting of the content item.

Advantages of certain embodiments mentioned above include the ability to execute the pre-qualification of potential sources. In certain embodiments, at least a portion of the method can be carried out offline. The pre-qualification can result in a reduced processing requirement during the accessing of network resources, since only a portion of the potential sources may be pre-qualified and, therefore, accessed for uncovering content, as opposed to the resource-consuming task of accessing each one of the potential sources. This in turn can mean that the pool of uncovered content may be effectively reduced in size which results in a reduced processing requirement for processing the pool of uncovered content and thereby allowing the content recommendation system to re-allocate processing capacity for handling more content recommendation deliveries to a plurality of devices within a reasonable time frame and without requiring increased processing capacity at the content recommendation server, especially during peak operation periods of the content recommendation server.

Also, content source profile data can be used when the recommendation system is used on a new territory (such as, for example, a new country where previously non-discovered resources may be accessible), hence requiring pre-qualification of a large number of potential sources of content recommendations. Certain embodiments of the present technology are based on developers' premise that certain network resources are better suited to be sources of content recommendations. Without wishing to be bound to any specific theory, developers of the present technology have developed systems and methods that pre-qualify network resources as "potential content sources" (based on the network resource profile utilizing a machine learning algorithm that places a larger weight on those network resources with a "fast paced" content, i.e. content that is frequently updated. These network resources can be (but are not limited to) news aggregators, media content aggregators and the like.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "client device" is any computer hardware that is capable of running software appropriate to the relevant task at hand. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts a system suitable for implementing non-limiting embodiments of the present technology.
Figure 2 depicts a screen shot of a recommendation interface implemented in accordance with a non-limiting embodiment of the present technology, the recommendation interface being depicted as displayed on the screen of an electronic device of the system of Figure 1, the electronic device being implemented as a smart phone.
Figure 3 depicts another embodiment of a system, the system being implemented in accordance with another non-limiting embodiment of the present technology.
Figure 4 depicts a block diagram of a method, the method executable in accordance with non-limiting embodiments of the present technology, the method executable within the system of Figure 1.
Figure 5 depicts a block diagram of a method, the method executable in accordance with another non-limiting embodiment of the present technology, the method executable within the system of Figure 3.

### DETAILED DESCRIPTION

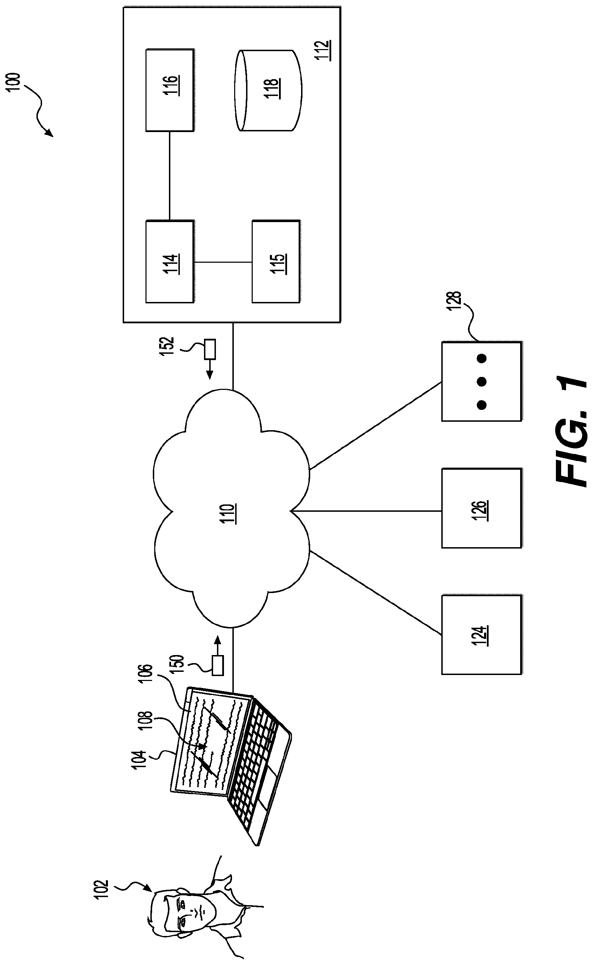

Referring to Figure 1, there is shown a schematic diagram of a system 100, the system 100 being suitable for implementing non-limiting embodiments of the present technology. It is to be expressly understood that the system 100 as depicted is merely an illustrative embodiment of the present technology. Thus, the description thereof that follows is intended to be only a description of illustrative examples of the present technology. This description is not intended to define the scope or set forth the bounds of the present technology. In some cases, what are believed to be helpful examples of modifications to the system 100 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition it is to be understood that the system 100 may provide in certain instances simple embodiments of the present technology, and that where such is the case they have been presented in this manner as an aid to understanding. As persons skilled in the art would understand, various embodiments of the present technology may be of a greater complexity.

Generally speaking, the system 100 is configured to provide content recommendations to a user 102 of the system 100. The user 102 may be a subscriber to a recommendation service provided by the system 100. However, the subscription does not need to be explicit or paid for. For example, the user 102 can become a subscriber by virtue of downloading a recommendation application from the system 100, by registering and provisioning a log-in / password combination, by registering and provisioning user preferences and the like. As such, any system variation configured to generate content recommendations for the given user can be adapted to execute embodiments of the present technology, once teachings presented herein are appreciated. Furthermore, the system 100 will be described using an example of the system 100 being a recommendation system (therefore, the system 100 can be referred to herein below as a "recommendation system 100" or a "prediction system 100" or a "training system 100"). However, embodiments of the present technology can be equally applied to other types of the systems 100, as will be described in greater detail herein below.

Although the user 102 of the system 100 is depicted as a single user of the system 100, it is contemplated that, in some embodiments of the present technology, the user 102 of the system 100 may be one of a plurality of users of the system 100. Indeed, the plurality of users may be subscribers to the recommendation service provided by the system 100 similarly to how the user 102 is subscribed to the recommendation service provided by the system 100 without departing from the scope of the present technology.

The system 100 comprises an electronic device 104, the electronic device 104 being associated with the user 102. As such, the electronic device 104 can sometimes be referred to as a "client device", "end user device" or "client electronic device". It should be noted that the fact that the electronic device 104 is associated with the user 102 does not need to suggest or imply any mode of operation - such as a need to log in, a need to be registered, or the like.

The embodiment of the electronic device 104 is not particularly limited, but as an example, the electronic device 104 may be implemented as a personal computer (desktops, laptops, netbooks, etc.), a wireless communication device (such as a smartphone, a cell phone, a tablet and the like), as well as network equipment (such as routers, switches, and gateways). The electronic device 104 comprises hardware and/or software and/or firmware (or a combination thereof), as is known in the art, to execute a recommendation application 106. Generally speaking, the purpose of the recommendation application 106 is to enable the user to receive (or otherwise access) content recommendations provided by the system 100, as will be described in greater detail herein below.

Although the electronic device 104 of the system 100 is depicted as a single electronic device of the system 100, it is contemplated that, in some embodiments of the present technology, the electronic device 104 of the system 100 may be one of a plurality of electronic devices of the system 100. Indeed, the plurality of the electronic devices may be implemented similarly to how the electronic device 104 is implemented without departing from the scope of the present technology.

How the recommendation application 106 is implemented is not particularly limited. One example of the recommendation application 106 may include a user accessing a web site associated with a recommendation service to access the recommendation application 106. For example, the recommendation application 106 can be accessed by typing in (or otherwise copy-pasting or selecting a link) an URL associated with the recommendation service. Alternatively, the recommendation application 106 can be an app downloaded from a so-called app store, such as APPSTORE" or GOOGLEPLAY™ and installed/executed on the electronic device 104. It should be expressly understood that the recommendation application 106 can be accessed using any other suitable means.

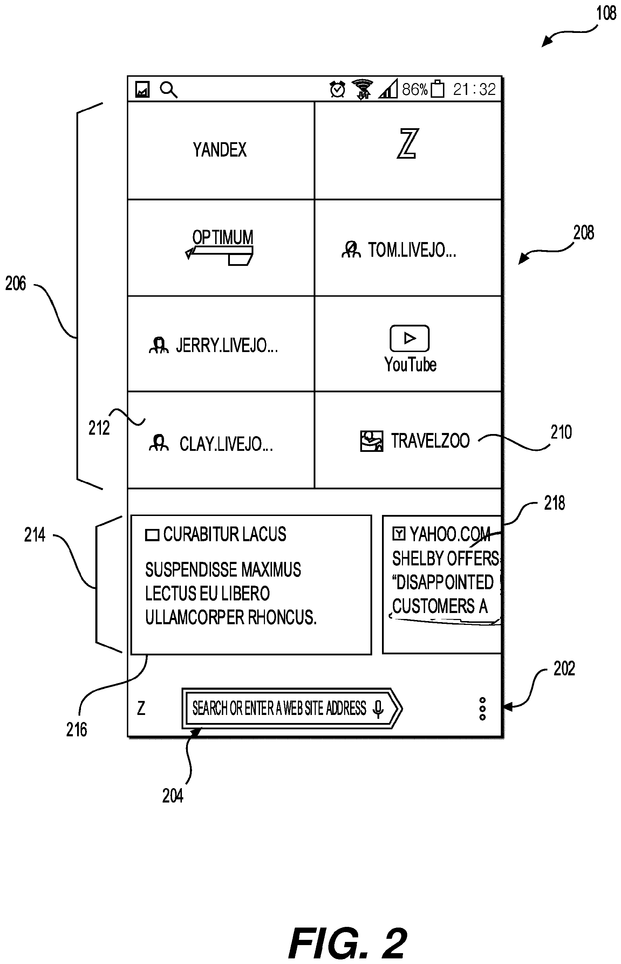

Generally speaking, the recommendation application 106 comprises a recommendation interface 108, the recommendation interface 108 being displayed on a screen (not separately numbered) of the electronic device 104. With reference to Figure 2, there is depicted a screen shot of the recommendation interface 108 implemented in accordance with a non-limiting embodiment of the present technology (the example of the recommendation interface 108 being depicted as displayed on the screen of the electronic device 104 being implemented as a smart phone).

In some embodiments of the present technology the recommendation interface 108 is presented when the user 102 of the electronic device 104 actuates (i.e. executes, run, background-run or the like) the recommendation application 106. Alternatively, the recommendation interface 108 can be presented when the user 102 opens a new browser window and/or activates a new tab in the browser application. For example, in some embodiments of the present technology, the recommendation interface 108 can act as a "home screen" in the browser application.

The recommendation interface 108 includes a search interface 202. The search interface 202 includes a search query interface 204. The search query interface 204 can be implemented as an "omnibox" which allows entry of a search query for executing a search or a network address (such as a Universal Remote Locator) for identifying a network resource (such as a web site) to be accessed. However, the search query interface 204 can be implemented as configured to receive one or both of: entry of the search query for executing the search or the network address (such as a Universal Remote Locator) for identifying the network resource (such as a web site) to be accessed.

The recommendation interface 108 further includes a links interface 206. The links interface 206 includes a plurality of tiles 208 - of which eight are depicted in Figure 2 - only two of which are numbered in Figure 2 - a first tile 210 and a second tile 212.

Using the example of the first tile 210 and the second tile 212 - each of the plurality of tiles 208 includes (or acts as) a link to either (i) a web site marked as "favourite" or otherwise marked by the user 102, (ii) a previously visited web site or (iii) the like. The plurality of tiles 208, in the depicted embodiment, is visually presented to the user 102 as square buttons with a logo and/or a name of the resource depicted therein, the logo and the name for enabling the user 102 to identify which resource the particular one of the plurality of tiles (not separately numbered) is linked to. However, it should be expressly understood that the visual representation of some or all of the plurality of tiles 208 can be different. As such, some or all of the plurality of tiles 208 can be implemented as differently shaped buttons, as hyperlinks presented in a list or the like.

As an example, the first tile 210 contains a link to a TRAVELZOO™ web site and the second tile 212 contains a link to a personal live journal web site. Needless to say, the number and content of the individual ones of the plurality of tiles 208 is not particularly limited.

For example, the number of the tiles within the plurality of tiles 208 can be pre-selected by the provider of the recommendation application 106. In some embodiments of the present technology, the number of tiles within the plurality of tiles 208 is pre-selected based on the size and/or resolution of the screen of the electronic device 104 executing the recommendation application 106. For example, a first number of tiles can be pre-selected for the electronic device 104 executed as a smartphone, a second number of tiles can be pre-selected for the electronic device 104 executed as a tablet, and a third number of tiles can be pre-selected for the electronic device 104 executed as a laptop or desktop computer.

The recommendation interface 108 further includes a recommended content set 214. The recommended content set 214 includes one or more recommended content items, such as a first recommended content item 216 and a second recommended content item 218 (the second recommended content item 218 only partially visible in Figure 2). Naturally, the recommended content set 214 can have more recommended content items. In the embodiment depicted in Figure 2 and in those embodiments where more than one recommended content item is present, the user 102 can scroll through the recommended content set 214. The scrolling can be achieved by any suitable means. For example, the user 102 can scroll the content of the recommended content set 214 by means of actuating a mouse device (not depicted), a keyboard key (not depicted) or interacting with a touch sensitive screen (not depicted) of or associated with the electronic device 104.

Example provided in Figure 2 is just one possible embodiment of the recommendation interface 108. Another example of the embodiment of the recommendation interface 108, as well as an explanation of how the user 102 can interact with the recommendation interface 108 is disclosed in a co-owned Russian Patent Application entitled **A COMPUTER-IMPLEMENTED METHOD OF GENERATING A CONTENT RECOMMENDATION INTERFACE**, filed on May 12, 2016 and bearing an application number 2016118519; content of which is incorporated by reference herein in its entirety.

How the content for the recommended content set 214 is generated will be described in greater detail herein below.

Returning to the description of Figure 1, the electronic device 104 is communicatively coupled to a communication network 110 for accessing a recommendation server 112. In some non-limiting embodiments of the present technology, the communication network 110 can be implemented as the Internet. In other embodiments of the present technology, the communication network 110 can be implemented differently, such as any wide-area communication network, local-area communication network, a private communication network and the like. A communication link (not separately numbered) between the electronic device 104 and the communication network 110 is implemented will depend *inter alia* on how the electronic device 104 is implemented. Merely as an example and not as a limitation, in those embodiments of the present technology where the electronic device 104 is implemented as a wireless communication device (such as a smartphone), the communication link can be implemented as a wireless communication link (such as but not limited to, a 3G communication network link, a 4G communication network link, Wireless Fidelity, or WiFi® for short, Bluetooth® and the like). In those examples where the electronic device 104 is implemented as a notebook computer, the communication link can be either wireless (such as Wireless Fidelity, or WiFi® for short, Bluetooth® or the like) or wired (such as an Ethernet based connection).

The recommendation server 112 can be implemented as a conventional computer server. In an example of an embodiment of the present technology, the recommendation server 112 can be implemented as a Dell™ PowerEdge™ Server running the Microsoft™ Windows Server™ operating system. Needless to say, the recommendation server 112 can be implemented in any other suitable hardware, software, and/or firmware, or a combination thereof. In the depicted non-limiting embodiments of the present technology, the recommendation server 112 is a single server. In alternative non-limiting embodiments of the present technology, the functionality of the recommendation server 112 may be distributed and may be implemented via multiple servers.

The recommendation server 112 comprises a processing module 114. The processing module 114 is coupled to or otherwise has access to a content source selection module 116. The content source selection module 116 has access to a data storage device 118. The processing module 114 is further coupled to a content recommendation selection module 115. Operation of the recommendation server 112 and its components will be described herein below in greater detail.

Also coupled to the communication network 110 are multiple network resources, including a first network resource 124, a second network resource 126 and a plurality of additional network resources 128. The first network resource 124, the second network resource 126 and the plurality of additional network resources 128 are all network resources accessible by the electronic device 104 (as well as other electronic devices potentially present in the system 100) via the communication network 110. Respective content of first network resource 124, the second network resource 126 and the plurality of additional network resources 128 is not particularly limited. A given one of the first network resource 124, the second network resource 126 and the plurality of additional network resources 128 can contain (or in other words, host) digital content such as: audio content for streaming, video content for streaming, news, blogs, information about various government institutions, information about points of interest, thematically clustered content (such as content relevant to those interested in kick-boxing), and the like.

The content is potentially "discoverable" to the electronic device 104 by various means. For example, the user 102 of the electronic device 104 can use a browser application (not depicted) and enter a Universal Resource Locator (URL) associated with the given one of the first network resource 124, the second network resource 126 and the plurality of additional network resources 128. Alternatively, the user 102 of the electronic device 104 can execute a search using a search engine (not depicted) to discover the content of one or more of the first network resource 124, the second network resource 126 and the plurality of additional network resources 128. As has been mentioned above, these are useful when the user 102 knows *apriori* which content the user 102 is interested in.

In accordance with embodiments of the present technology, the recommendation application 106 can recommend content items available from the given one of the first network resource 124, the second network resource 126 and the plurality of additional network resources 128 to the user 102, the content items that the user 102 may not *apriori* know about. The recommendation server 112 is configured to select content for the one or more recommendation items to be presented to the user 102 via the recommendation application 106. More specifically, the processing module 114 is configured to (i) receive from the electronic device 104 a request for the content recommendation 150 and (ii) responsive to the request, generate a recommended content message 152 specifically customized for the user 102 associated with the electronic device 104. The processing module 114 can further coordinate execution of various routines described herein as performed by the given one of the first network resource 124, the second network resource 126 and the plurality of additional network resources 128 and the content source selection module 116, for example.

In some embodiments of the present technology, the request for the content recommendation 150 can be generated in response to the user 102 providing an explicit indication of the user desire to receive the content recommendation. For example, the recommendation interface 108 can provide a button (or another actuatable element) to enable the user 102 to indicate her/his desire to receive a new or an updated content recommendation. As a non-limiting example, the recommendation interface 108 can provide an actuatable button that reads "Request a content recommendation". Within these embodiments, the request for the content recommendation 150 can be thought of as "an explicit request" in a sense of the user 102 expressly providing a request for the recommended content.

In other embodiments, the request for the content recommendation 150 can be generated in response to the user 102 providing an implicit indication of the user desire to receive the content recommendation. In some embodiments of the present technology, the request for the content recommendation 150 can be generated in response to the user 102 starting the recommendation application 106.

Alternatively, in those embodiments of the present technology where the recommendation application 106 is implemented as a browser (for example, a GOOGLE™ browser, a YANDEX™ browser, a YAHOO! ™ browser or any other proprietary or commercially available browser application), the request for content recommendation 150 can be generated in response to the user 102 opening the browser application and can be generated, for example, without the user 102 executing any additional actions other than activating the browser application. As another example, the request for content recommendation 150 can be generated in response to the user 102 opening a new tab of the already-opened browser application and can be generated, for example, without the user 102 executing any additional actions other than activating the new browser tab. In other words, the request for the content recommendation 150 can be generated even without the user 102 knowing that the user 102 may be interested in obtaining a content recommendation.

As another example, the request for content recommendation 150 can be generated in response to the user 102 selecting a particular element of the browser application and can be generated, for example, without the user 102 executing any additional actions other than selecting/activating the particular element of the browser application.

It is contemplated that, in some embodiments of the present technology, each one of the plurality of electronic devices of the system 100 may be configured to generate a respective request for content recommendation similarly to how the electronic device 104 is configured to generate the request for content recommendation 150 without departing from the scope of the present technology. This means that the processing module 114 may be configured to (i) receive a plurality of requests for the content recommendations from the plurality of electronic devices and (ii) responsive to these requests, generate respective recommended content messages specifically customized for a respective user associated with each one of the plurality of electronic devices. In some embodiments, the processing module 114 may receive a large number of requests for the content recommendations from the plurality of electronic devices (e.g., 1000, 10000, 1000000 and the like) and, in response to these requests, may generate a large number of recommended content messages specifically customized for a respective user (e.g., 1000, 10000, 1000000 and the like).

Examples of the particular element of the browser application include but are not limited to: an address line of the browser application bar, a search bar of the browser application and/or a search bar of a search engine web site accessed in the browser application, an omnibox (combined address and search bar of the browser application), a favourites or recently visited network resources pane, and any other pre-determined area of the browser application interface or a network resource displayed in the browser application.

In some embodiments of the present technology, each of the content recommendation selection module 115 and the content source selection module 116 can be configured to execute their respective one or more machine learning algorithms. In some embodiments of the present technology, one or more machine learning algorithms can be any suitable or semi-supervised supervised machine learning algorithm, such as but not limited to: artificial neural network, bayesian statistics, gaussian process regression, decision trees and the like.

It is noted that the respective one or more machine algorithms executed by the content recommendation selection module 115 and the content source selection module 116 do not need to be the same relative to each other.

Even though the content recommendation selection module 115 and the content source selection module 116 have been described as separate entities each executing its respective one or more machine learning algorithms, in alternative embodiments of the present technology, the one or more machine learning algorithms respectively executed by the content recommendation selection module 115 and the content source selection module 116 can be executed by a single entity (such as the processing module 114, for example). Alternatively, the one or more machine learning algorithms respectively executed by the content recommendation selection module 115 and the content source selection module 116 can be distributed amongst more modules than the ones depicted in Figure 1 and can be executed as part of multiple instances of the recommendation server 112.

Furthermore, each one of the content recommendation selection module 115 and the content source selection module 116 can execute additional functions (i.e. others than the respective one or more machine learning algorithms).

For example, the content source selection module 116 can execute a "crawling function", which can be broadly described as a function for discovering new network resources and/or new content published by the first network resource 124, the second network resource and a number of additional network resources 128. To that end, the content source selection module 116 is configured to execute what is known a "crawler robot" that "visit" various network resources available / accessible via the communication network 110 (including the first network resource 124, the second network resource and a number of additional network resources 128) to discover and catalogue newly available resources (such as one of the first network resource 124, the second network resource and a number of additional network resources 128) or newly published content available from the first network resource 124, the second network resource and a number of additional network resources 128.

As part of the crawling function, the content source selection module 116 is configured to maintain (in the data storage device 118) information representative of the newly discovered network resources and/or newly discovered content available therefrom. In some embodiments, the content source selection module 116 can be configured to maintain an inverted index within the data storage device 118, but the content source selection module 116 can arrange the information representative of the newly discovered network resources and/or newly discovered content available therefrom in a data structure other than an inverted index.

The content source selection module 116 can further collect and maintain additional information about the available network resources and/or content available from those network resources such as one of the first network resource 124, the second network resource and a number of additional network resources 128). Additional information can be generally associated with a visit (i.e. a given user browsing activity of a particular network resource), a hit (i.e. the given user transition into the particular network resource, away from the particular network resource and between various web pages of the particular network resource) or a session (i.e. the particular user browsing session that can include visits to one or more network resources).

Some examples of the additional information collected about the available resources and/or content available from those resources include (but is not limited to): hits per visit (HPV) (e.g., how many pages, within a given network resource, a given user has visited during browsing the given network resource), sessions per visit (SPV) (e.g., how many sessions contained visits to the particular network resource), dated-pages per visit (DPV) (e.g., how many pages of a given network resource with a date in the page URL, a given user has visited during a given visit to the given network resource), home page per visit (MPV) (e.g., how many times during a given visit a given user visited a home page of a given network resource), time spent on the network resource (MTIME) (e.g., how much time a given user has spent browsing a given network resource), last domain per session (LPS) (e.g., whether the given network resource was a last network resource in a given web browsing session of a given user), first domain per session (FPS) (e.g., whether the given network resource was a first network resource in a given web browsing session of a given user), hits per session (HPS) (e.g., how many pages of any network resources, a given user has visited during a given browsing sessions (i.e. how many transitions were made during the given session)), visits per user (VPU) (e.g., an average number of visits to the given network resource), hits per user (HPU) (e.g., an average number of transitions between various pages of the given network resource (or, alternatively, all network resources)), sessions per user (SPU) (e.g., an average number of sessions that included visits the given network resource; dated-pages per hit (DPH) (e.g., how many pages of a given network resource with a date in the page URL, a given user has visited during a given visit to the given network resource), home pages per hit (MPH) (e.g., how many times a given user has navigated to the home page of a given network resource during the visit to the given network resource), an indication of a source of a transition to the given network resource being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

How the content source selection module 116 collects the additional information is not particularly limited. For example, some sources of the additional information include (but are not limited to): search engine logs, browser application logs, network resource tracking widgets, and the like.

For example, the content source selection module 116 can have access to a search engine log and obtain information of whether a given user has accessed a given network resource from a search engine. As another example, the content source selection module 116 may have access to the logs of the browser application executed on the electronic device 104 and receive an indication (which can be anonymized to protect a given user privacy) in regard to the given user 102: transition to the given network resource, transitions of the given user between various pages of the given network resource, information about the web pages of the given network resource visited (such as URLs, dates in the URLs and the like), time spent on the various web pages of the given network resource, user browsing sessions and the various network resources visited during the browsing session, and the like.

As another example, many of the available network resources install resource tracking widgets (such as, for example, Google™ Analytics, Yandex™ Metrica or the like). Naturally, the content source selection module 116 can obtain the additional information in a number of additional ways from a number of additional sources.

As such, in accordance with the non-limiting embodiments of the present technology, the recommendation server 112 is configured to execute a two-stepped approach to selection recommendations (i.e. recommended items) for inclusion into the recommended content message 152 in response to the request for the content recommendation 150.

The two-stepped approach is particularly useful (but is not limited) for those circumstances when the content recommendation service provided by the recommendation server 112 is offered in a new territory - such as a country, a region of a country, a new city or the like. A particular technical effect arising from the use of embodiments of the present technology is the ability to "pre-qualify" potential sources of content recommendations in an "offline" mode ("offline" referring to processing prior to receiving the request for the content recommendation 150). In some embodiments of the present technology, such pre-qualifying of potential sources of content recommendations in an offline mode may allow providing during an "online" mode ("online" referring to processing in response to receiving the request for the content recommendation 150) sufficiently relevant content recommendations to a plurality of users within an acceptable amount of time and that, by a more efficient usage or consumption of the processing power of the recommendation server 122 during the online mode.

Embodiments of the present technology are based on the premise that not all of the network resources (i.e. the first network resource 124, the second network resource 126 and the plurality of additional network resources 128) contain potential content item suitable for processing and recommendation by the recommendation server 112. For example, some of the network resources (i.e. the first network resource 124, the second network resource 126 and the plurality of additional network resources 128) may contain content item that would not be of interest to the subscribers to the recommendation service provided by the recommendation server 112.

Embodiments of the present technology are further based on the premise that content of certain network resources (i.e. the first network resource 124, the second network resource 126 and the plurality of additional network resources 128) is more suitable for processing and recommendation by the recommendation server 112. For example, if a given one of the network resources (i.e. the first network resource 124, the second network resource 126 and the plurality of additional network resources 128) is an aggregator of news, it is more likely to contain content items suitable for processing and recommendation by the recommendation server 112. Such the network resource, is likely to have frequently updated content items (i.e. newly published news, articles, etc), as well as host content items that are of potential interest to a wide audience.

On the other hand, some other network resources (i.e. the first network resource 124, the second network resource 126 and the plurality of additional network resources 128) contain content items that are less susceptible for processing and recommendation by the recommendation server 112. For example, a personal web site of a cat lover from Winnipeg, posting pictures of her three cats, is unlikely to provide potential content items for processing and recommendation by the recommendation server 112. This is due to the fact that the content of such the network resource is rarely updated and is associated with a relatively niche interest.

Generally speaking, the two-stepped approach provides:

### At a first stage:

- Select those ones of the plurality of network resources (i.e. the first network resource 124, the second network resource 126 and the plurality of additional network resources 128) that contain potential content items for recommendation - more specifically, the recommendation server 112 determines a source suitability parameter for the network resource, the source suitability parameter being indicative of the network resource being susceptible to publishing the content item that can be processed by the recommendation server 112;

### At a second stage:

- From the so-selected network resources, the recommendation server 112 selects at least one content item, the at least one content item for submitting to the content recommendation selection module 115 for processing and selecting personalized content item recommendations for the user 102, in response to receiving the request for content recommendation 150.

Broadly speaking, in some embodiments of the present technology, the two-stepped approach can be implemented as follows:

### Training of the machine learning algorithm

Prior to execution of the two-stepped selection process, the recommendation server 112 (or, more specifically, the processing module 114) executes training of the machine learning algorithm that the content source selection module 116 uses to select content sources. Generally speaking, the machine learning algorithm is trained to determine the source suitability parameter of a given network resources (i.e. the first network resource 124, the second network resource 126 and the plurality of additional network resources 128) based on a training set of network resources and associated labels assigned by assessors. The label can be, for example, "low sources suitability parameter", "medium sources suitability parameter", and "high sources suitability parameter". Alternatively, the label can be, for example, "suitable" and "unsuitable".

During training, the machine learning algorithm of the content source selection module 116 is presented with the training set of network resources and the associated labels in order to process various features associated with the web pages of the network resources in order to develop a given network resource profile and correlate the so-generated network resource profile to the associated labels in order to generate a "machine learning algorithm formula" that enables the machine learning algorithm of the content source selection module 116 to (i) be presented with an unknown network resource (such as a new of the first network resource 124, the second network resource 126 and the plurality of additional network resources 128), (ii) to analyze features of a given web page or the entire network resource (i.e. the first network resource 124, the second network resource 126 and the plurality of additional network resources 128) to generate its respective network resource profile; and (iii) to determine, based on the so-generated network resource profile, a source suitability parameter associated therewith.

In some embodiments of the present technology, the plurality of features used by the machine learning algorithm includes at least an absolute feature (for example, a total number of visits to the network resource) and a relative feature (for example, an average number of visits in a given period of time or a number of hits per user). In some embodiments of the present technology, the machine learning algorithm used the absolute feature and the relative feature as base features and, additionally, generates at least one derivative feature based on at least one of the absolute feature and the relative feature to use for generating the network resource profile.

In various embodiments of the present technology, the derivative features are generated using one or more of: a logarithmic formula, a sigmoid function, and a root function. In some embodiments, the machine learning algorithm normalizes the features of the network resource. In some embodiments, the features are normalized to mean=0, stddev=1.

In accordance with some embodiments of the present technology, as part of training the machine learning algorithm of the content source selection module 116, the machine learning algorithm is configured to determine out of all possible features of the network resource a sub-set of features that better correlate to the source suitability parameter.

In a specific non-limiting embodiment of the present technology, out of all the possible features associated with the network resource, the machine learning algorithm of the content source selection module 116 can select a sub-set of features that consists of: at least one of: a proportion of a landing page of the network resource visits within an initial transition to the network resource within a session and a proportion of the landing page visits during transitions within the network resource; at least one of: a proportion of a web pages associated with an URL containing a date being a first page visited within the initial transition to the network resource and a proportion of the web pages within the network resource visited during the session, the web pages being associated with an URL containing a date; a proportionate profile of visit sources for the network resource, the visit sources being selected from: search engine/social networks/mail and messenger application/URL condensers/direct visits; and a proportion of session where the network resource was last in the session.

Naturally, in alternative embodiments of the present technology, a different sub-set of entirety of features associated with the network resource can be used by the machine learning algorithm.

Examples of the features include but are not limited to: hits per visit (HPV) - how many pages, within a given network resource, a given user has visited during browsing the given network resource; sessions per visit (SPV) - how many sessions contained visits to the particular network resource; dated-pages per visit (DPV) - how many pages of a given network resource with a date in the page URL, a given user has visited during a given visit to the given network resource; home page per visit (MPV) - how many times during a given visit a given user visited a home page of a given network resource; time spent on the network resource (MTIME) - how much time a given user has spent browsing a given network resource; last domain per session (LPS) - whether the given network resource was a last network resource in a given web browsing session of a given user; first domain per session (FPS) - whether the given network resource was a first network resource in a given web browsing session of a given user; hits per session (HPS) - how many pages of any network resources, a given user has visited during a given browsing sessions (i.e. how many transitions were made during the given session); visits per user (VPU) - an average number of visits to the given network resource; hits per user (HPU) - an average number of transitions between various pages of the given network resource (or, alternatively, all network resources); sessions per user (SPU) - an average number of sessions that included visits the given network resource; dated-pages per hit (DPH) - how many pages of a given network resource with a date in the page URL, a given user has visited during a given visit to the given network resource; home pages per hit (MPH) - how many times a given user has navigated to the home page of a given network resource during the visit to the given network resource; an indication of a source of a transition to the given network resource being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

It should be noted that when the so-trained machine learning algorithm is trained and is used for determining a source suitability parameter of an unknown network resource, the machine learning algorithm uses at least some (or all) of the features that it has been trained on (or at least features of the same category as it has been trained upon).

In some embodiments of the present technology, the machine learning algorithm is trained to determine the source suitability parameter using a logistical regression analysis. In alternative non-limiting embodiments, the machine learning algorithm is trained to determine the source suitability parameter using one or more of: a logistical regression analysis; naive Bayes algorithm; k-nearest neighbor algorithm; random forest algorithm; and hard voting algorithm.

In some embodiments of the present technology, for a given network resource (i.e. the first network resource 124, the second network resource 126 and the plurality of additional network resources 128), features thereof are grouped based on their geographical location. For example, if the given network resource is the online resource of "New York Times", one feature can be based on network resource visitors from the Unites States, another feature based on network resource visitors from the United Kingdom.

### First stage - Content recommendation source selection

During the first stage, the content source selection module 116 receives an indication of one or more network resources (i.e. the first network resource 124, the second network resource 126 and the plurality of additional network resources 128). In some embodiments, the received indication is an indication of a new network resource that has not previously been crawled. In other embodiments, the received indication is for an updated network resource, i.e. the network resource that has been previously crawled but may have been updated with new content. In some embodiments of the present technology, the content source selection module 116 receives an indication of one or more network resources (i.e. the first network resource 124, the second network resource 126 and the plurality of additional network resources 128) from the data storage device 118.

The content source selection module 116 then executes the trained machine learning algorithm to determine the source suitability parameter associated with the network resource in question (i.e. the first network resource 124, the second network resource 126 and the plurality of additional network resources 128).

In some embodiments of the present technology, the content source selection module 116 generates the network resource profile for an entire network resource (i.e. the first network resource 124, the second network resource 126 and the plurality of additional network resources 128) by analysing features of one or more web pages of the entire network resource (i.e. the first network resource 124, the second network resource 126 and the plurality of additional network resources 128).

In other embodiments of the present technology, the content source selection module 116 generates a respective network resource profile for a sub-set of web pages of the network resource (i.e. the first network resource 124, the second network resource 126 and the plurality of additional network resources 128) by analysing features of one or more web pages of that sub-set of the network resource (i.e. the first network resource 124, the second network resource 126 and the plurality of additional network resources 128).

In yet further embodiments, the content source selection module 116 can generate a respective network resource profile for each web page of the network resource (i.e. the first network resource 124, the second network resource 126 and the plurality of additional network resources 128) by analysing features of each individual web page of the network resource (i.e. the first network resource 124, the second network resource 126 and the plurality of additional network resources 128).

Then, based on the so-generated profile (whether for an individual web page, a sub-set of web pages within the given network resource, or the entire given network resource), the content source selection module 116 determines the content source suitability parameter. The content source selection module 116 generates the content source suitability parameter based on the machine learning algorithm formula generated during the training phase.

The content source selection module 116 then determines if the given network resource (or a sub-set of web pages or individual web pages thereof, as the case may be) are potential sources of content items for recommendation. In some embodiments of the present technology, the content source selection module 116 compares the so-determined source suitability parameter to a pre-determined threshold - in response to the source suitability parameter being above the pre-determine threshold, the content source selection module 116 determines that the given network resource (or a sub-set of web pages or individual web pages thereof, as the case may be) is a potential source of the recommendation items. It is noted that the pre-determined threshold can be determined by the machine learning algorithm as part of the training phase.

### Second stage - Content recommendations selection from the selected content sources

Next, the content source selection module 116 selects, out of each of the network resources having been determined to be potential sources of content items, one or more content items for submitting to the recommendation engine (i.e. content recommendation selection module 115).

In some embodiments of the present technology, the selection of the content items from the so-selected content sources is executed "on-line", i.e. in response to the receipt of the request for the content recommendation 150. In other embodiments, the selection of the content items from the so-selected content sources can be executed "off-line", i.e. before the receipt of the request for the content recommendation 150 (for example, such selection can be executed on a regular basis, such as every day, every 7 days, every month or the like, based on how "perishable" content items are).

The selection of the content items from the so-selected content sources can be executed using one or more heuristics. For example, the content source selection module 116 selects a pre-defined number of content items (such as 2 content items, 5 content items, 10 content items, and the like) being associated with one or more: (i) most recent publication date, (ii) most visits during the past X number of days, (iii) being associated with a particular section of the given network resource (such as "most recent", "hot", etc).

### Processing by the recommendation system

Once the content source selection module 116 selects the content items candidates from one or more of the identified content sources, the so-selected candidates are submitted to the content recommendation selection module 115. The content recommendation selection module 115 executes its own machine learning algorithm that is trained and configured to select from the content items candidates submitted thereto, a sub-set of content items for the given user 102 in response to receipt of the request for the content recommendation 150.

How the content recommendation selection module 115 is implemented is not particularly limited. An example of the machine learning algorithm that can be used by the content recommendation selection module 115 is disclosed in a co-owned Russian Patent Application entitled: "METHOD AND APPARATUS FOR GENERATING A RECOMMENDED CONTENT LIST" and bearing an application number 2015136684 filed on August 22, 2015; content of which is incorporated herein by reference in its entirety.

Once the content recommendation selection module 115 generates the sub-set of content items for the given user 102, the content recommendation selection module 115 generates a recommended content message 152 and transmits the same to the electronic device 104. When the electronic device 104 receives the recommended content message 152, the recommendation application 106 processes content thereof and displays the recommended content items on the recommendation interface 108. How the recommendation interface 108 is implemented is not particularly limited - the recommendation interface 108 depicted in Figure 2 can be used. As another example, the recommendation interface 108 can be implemented as disclosed in the co-owned Russian Patent Application entitled: "METHOD OF AND SYSTEM FOR INTERACTING WITH A CONTENT ELEMENT OF A CONTENT STREAM" and bearing an application number 2015141291 filed on September 29, 2015; content of which is incorporated herein by reference in its entirety.

Given the architecture and examples provided herein above, it is possible to execute a method of selecting a network resource as a source of a content item, the content item to be analyzed by a recommendation system (i.e. the content recommendation selection module 115) as part of a plurality of content items to generate a set of recommended content items as a recommendation for the given user 102 of the system 100.

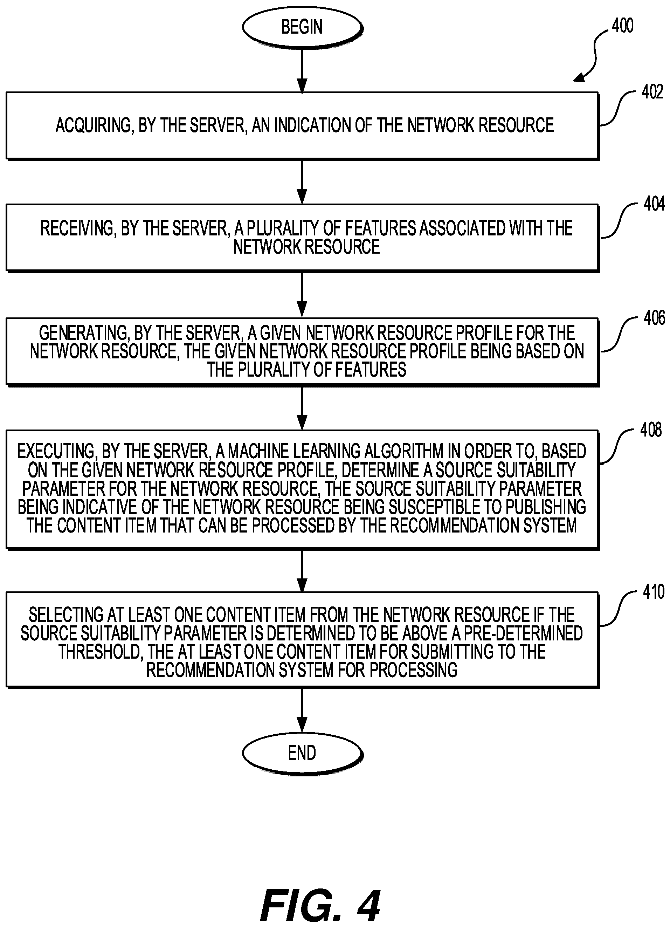

Figure 4 depicts a block diagram of a method 400, the method 400 executable in accordance with non-limiting embodiments of the present technology. The method 400 can be executed on the recommendation server 112 and, more specifically, using the content source selection module 116. For the purposes of the description to be presented herein below, it is assumed that the machine learning algorithm to be executed by the content source selection module 116 has been trained to determine a source suitability parameter based on training web site profiles generated with an associated plurality of training features at least some of which are of a same category as the plurality of features to be used during execution of the method 200.

### Step 402 - acquiring, by the server, an indication of the network resource

The method 400 begins at step 402, where the content source selection module 116 receives an indication of the network resource.

As has been previously alluded to, the content source selection module 116 can execute a "crawling function", which can be broadly described as a function for discovering new network resources and/or new content published by the first network resource 124, the second network resource and a number of additional network resources 128. To that end, the content source selection module 116 is configured to execute what is known a "crawler robot" to visit various network resources available / accessible via the communication network 110 (including the first network resource 124, the second network resource and a number of additional network resources 128) to discover and catalogue newly available resources (such as one of the first network resource 124, the second network resource and a number of additional network resources 128) or newly published content available from the first network resource 124, the second network resource and a number of additional network resources 128.

As part of the crawling function, the content source selection module 116 is configured to maintain (in the data storage device 118) information representative of the newly discovered network resources and/or newly discovered content available therefrom. In some embodiments, the content source selection module 116 can be configured to maintain an inverted index within the data storage device 118, but the content source selection module 116 can arrange the information representative of the newly discovered network resources and/or newly discovered content available therefrom in a data structure other than an inverted index.

As such, in some embodiments of the present technology, the content source selection module 116 can receive an indication of the network resource to be processed from the data storage device 118.

### Step 404 - receiving, by the server, a plurality of features associated with the network resource

At step 404, the content source selection module 116 receives a plurality of features associated with the network resource. For example, the content source selection module 116 can retrieve features associated with the network resource from the data storage device 118.

As will be recalled, the machine learning algorithm executed by the content source selection module 116 has been trained on certain features of the training set of network resources and, as such, the machine learning algorithm executed by the content source selection module 116 retrieves those features associated with the network resource that it has been trained to process.

In some embodiments of the method 400, the machine learning algorithm having been trained, prior to said acquiring, to determine the source suitability parameter based on training web site profiles generated with an associated plurality of training features at least some of which are of a same category as the plurality of features.

In some embodiments of the method 400, the plurality of features includes at least an absolute feature and a relative feature.

In some embodiments of the method 400 the absolute feature and the relative feature are base features and the method 400 further comprises: generating at least one derivative feature based on at least one of the absolute feature and the relative feature; and wherein the given web site profile is further based on the at least one derivative feature.

In some embodiments of the method 400, the plurality of features includes an indication of a proportion of visit sources to the network resource.

In some embodiments of the method 400, the plurality of features includes at least one relative feature selected from: hits per visit (HPV); sessions per visit (SPV); dated-pages per visit (DPV); home page per visit (MPV); time spent on the network resource (MTIME); last domain per session (LPS); first domain per session (FPS); hits per session (HPS); visits per user (VPU); hits per user (HPU); sessions per user (SPU); dated-pages per hit (DPH); home pages per hit (MPH); and an indication of a visit source being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

In some embodiments of the method 400, the plurality of features includes at least one of: a number of users visiting the network resource per time interval, number of visits per time interval, number of transitions within various web pages within the network resource per time interval, and a number of unique sessions with the network resource per time interval.

In some embodiments of the method 400, the plurality of features is a subset of all possible features, the method further comprising executing a feature selection to define the subset.

In some embodiments of the method 400, the subset of all possible features consists of:
- at least one of: a proportion of a landing page of the network resource visits within an initial transition to the network resource within a session and a proportion of the landing page visits during transitions within the network resource;
- at least one of: a proportion of a web page associated with an URL containing a date being a first page visited within the initial transition to the network resource and a proportion of the web pages within the network resource visited during the session, the web pages being associated with an URL containing a date;
- a proportionate profile of visit sources for the network resource, the visit sources being selected from: search engine/social networks/mail and messenger application/URL condensers/direct visits;
- a proportion of session where the network resource was last in the session.

### Step 406 - generating, by the server, a given network resource profile for the network resource, the given network resource profile being based on the plurality of features

At step 406, the content source selection module 116 generates a given network resource profile for the network resource, the given network resource profile being based on the plurality of features.

In some embodiments of the present technology, the content source selection module 116 generates a vector representative of the given network resource profile based on some or all of: hits per visit (HPV); sessions per visit (SPV); dated-pages per visit (DPV); home page per visit (MPV); time spent on the network resource (MTIME); last domain per session (LPS); first domain per session (FPS); hits per session (HPS); visits per user (VPU); hits per user (HPU); sessions per user (SPU); dated-pages per hit (DPH); home pages per hit (MPH); and an indication of a visit source being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

In some embodiments of the present technology, the content source selection module 116 executes a feature selection routine and, as such, the vector representative of the given network resource profile can be based on a pre-selected set of network resource features.

### Step 408 - executing, by the server, a machine learning algorithm in order to, based on the given network resource profile, determine a source suitability parameter for the network resource, the source suitability parameter being indicative of the network resource being susceptible to publishing the content item that can be processed by the recommendation system

At step 408, the content source selection module 116 executes a machine learning algorithm in order to, based on the given network resource profile, determine a source suitability parameter for the network resource, the source suitability parameter being indicative of the network resource being susceptible to publishing the content item that can be processed by the recommendation system.

In some embodiments of the method 400, the source suitability parameter is one of a suitable and non-suitable. The source suitability parameter can be determined using at least one of: a logistical regression analysis; naive Bayes algorithm; k-nearest neighbor algorithm; random forest algorithm; and hard voting algorithm.

### Step 410 - selecting at least one content item from the network resource if the source suitability parameter is determined to be above a pre-determined threshold, the at least one content item for submitting to the recommendation system for processing

At step 410, the content source selection module 116 selects at least one content item from the network resource if the source suitability parameter is determined to be above a pre-determined threshold, the at least one content item for submitting to the recommendation system for processing (i.e. the content recommendation selection module 115).

In some embodiments of the present technology, step 410 is implemented in response to a request from the given user 102 for a recommendation (i.e. in response to receiving the request for the content recommendation 150).

The method 400 can then terminate or return to step 402 and await for another one of the request for content recommendation 150.

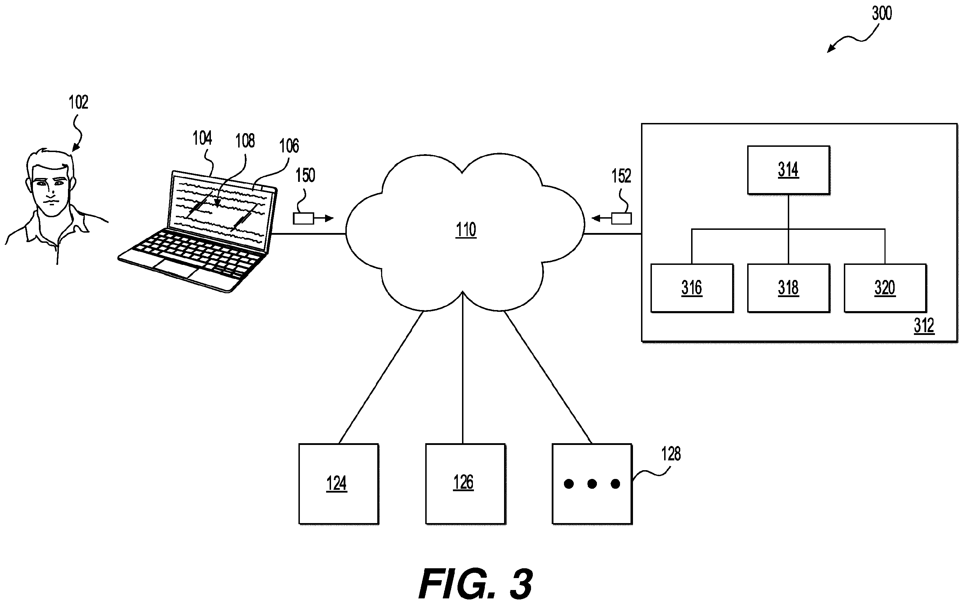

With reference to Figure 3, there is depicted another embodiment of a system 300, the system 300 being implemented in accordance with another non-limiting embodiment of the present technology. The system 300 includes certain components that are implemented substantially similar to those of the system 100. These components are denoted with the same reference numerals as components of the system 100. To that end, the system 300 comprises: the user 102, the electronic device 104 (with the recommendation application 106 executed thereon, the recommendation application 106 having the recommendation interface 108), and the communication network 110. Also coupled to the communication network 110 are the first network resource 124, the second network resource 126 and the plurality of additional network resources 128 that are all network resources accessible by the electronic device 104 (as well as other electronic devices potentially present in the system 300) via the communication network 110.

Respective content of the first network resource 124, the second network resource 126 and the plurality of additional network resources 128 is not particularly limited. As such a given one of the first network resource 124, the second network resource 126 and the plurality of additional network resources 128 can contain (or in other words, host) digital content such as: audio content for streaming, video content for streaming, news, blogs, information about various government institutions, information about points of interest, thematically clustered content (such as content relevant to those interested in kick-boxing), and the like.

In accordance with the non-limiting embodiment depicted in Figure 3, the system 300 further comprises a recommendation server 312. The recommendation server 312 can be implemented as a conventional computer server. In an example of an embodiment of the present technology, the recommendation server 312 can be implemented as a Dell™ PowerEdge™ Server running the Microsoft™ Windows Server™ operating system. Needless to say, the recommendation server 312 can be implemented in any other suitable hardware, software, and/or firmware, or a combination thereof. In the depicted non-limiting embodiments of the present technology, the recommendation server 312 is a single server. In alternative non-limiting embodiments of the present technology, the functionality of the recommendation server 312 may be distributed and may be implemented via multiple servers.

The recommendation server 312 comprises a processing module 314. The processing module 314 is coupled to a content source determination module 316. The content source determination module 316 is configured to determine out of a plurality of potential content sources (i.e. the first network resource 124, the second network resource 126 and the plurality of additional network resources 128) a sub-set of content sources.

In some embodiments of the present technology, the content source determination module 316 is configured to execute a first machine learning algorithm in order to determine the sub-set of recommended content sources from the plurality of possible content sources (i.e. the first network resource 124, the second network resource 126 and the plurality of additional network resources 128).

In some embodiments of the present technology, in order to determine the sub-set of recommended content sources, the content source determination module 316 is configured to: acquire an indication of user-past-interactions with at least one of: (i) the system 100 and (ii) at least some of the plurality of network resources (such as the first network resource 124, the second network resource 126 and the plurality of additional network resources 128); based on the user-past-interactions, determine a first sub-set of user-specific content sources (i.e. some of the first network resource 124, the second network resource 126 and the plurality of additional network resources 128); based on (i) a machine learning algorithm trained formula of other user interactions with at least some others of the plurality of network resources (i.e. the first network resource 124, the second network resource 126 and the plurality of additional network resources 128) and at least one of: (ii) the first sub-set of user-specific content sources; and (iii) a user-profile-vector generated based on the user-past-interactions, to generate a second sub-set of user-non-specific content sources; process the first sub-set of user specific content sources and the second sub-set of user-non-specific content sources in order to generate the sub-set of recommended content sources.

More specifically, the function of the content source determination module 316 can be implemented as follows, in at least some of the non-limiting embodiments of the present technology.

### Generating a user-profile-vector

The content source determination module 316 can acquire an indication of user-past-interactions with at least one of: (i) the system 300 and (ii) at least some of the plurality of network resources (such as the first network resource 124, the second network resource 126 and the plurality of additional network resources 128).

In some embodiments of the present technology, the content source determination module 316 receives the indication of the user-past-interaction from the browser application executed on the electronic device 104. In other embodiments, the content source determination module 316 receives the indication of the user-past-interaction from the search engine logs. In yet other embodiments, the content source determination module 316 receives the indication of the user-past-interaction from the tracking widgets installed at the various network resources (such as the first network resource 124, the second network resource 126 and the plurality of additional network resources 128).

### Determining a user-specific sub-set of content sources

Based on the user-past-interactions, the content source determination module 316 can determine a first sub-set of user-specific content sources (i.e. some of the first network resource 124, the second network resource 126 and the plurality of additional network resources 128). More specifically, the content source determination module 316 determines one or more of the potentially content sources (i.e. some of the first network resource 124, the second network resource 126 and the plurality of additional network resources 128) that the user 102 has interacted with in the past - for example, by means of browsing to or through one or more of the network resources, receiving and/or actuating a content recommendations from one or more of the network resources, etc. In other words, the first sub-set of user-specific content sources can be thought of "user-specific" or "expressly liked content sources" in the sense that the user 102 has specifically interacted with these network resources and can be deemed to like the content thereof due to the interaction therewith.

### Enriching the user-specific sub-set of content sources to generate a user-non-specific sub-set of content sources

Next, the content source determination module 316 enriches the user-specific sub-set of content sources with content sources that the user 102 may not have previously seen. More specifically, based on (i) a machine learning algorithm trained formula of other user interactions with at least some others of the plurality of network resources (i.e. the first network resource 124, the second network resource 126 and the plurality of additional network resources 128) and at least one of: (ii) the first sub-set of user-specific content sources; and (iii) a user-profile-vector generated based on the user-past-interactions, to generate a second sub-set of user-non-specific content sources.

In some embodiments of the present technology, the machine learning algorithm used can be a Singular Value Decomposition (SVD) algorithm. Within these embodiments of the present technology, the machine learning algorithm determines the user-non-specific sub-set of content sources based on a user-profile-vector generated based on the user-past-interactions. More specifically, the machine learning algorithm, implemented as the SVD algorithm, generates a matrix of (i) network resources events and (ii) users (based on information about past interactions of a plurality of users with a plurality of network resources, i.e. the first network resource 124, the second network resource 126 and the plurality of additional network resources 128).

The machine learning algorithm then applies the SVD algorithm to decompose the matrix into vectors of network resources and vectors of users. Then, the SVD algorithm discards the vectors of users and saves the vectors of network resources (for example stores them in a data storage device, which is not depicted in Figure 3).

When the content source determination module 316 receives the user-profile-vector, the SVD algorithm multiplies the so-received user-profile-vector and the saved vectors of network resources to recreate the matrix of network resources with their associated ranks specific for the user 102 associated with the user-profile-vector. Based on the ranked network resources, the content source determination module 316 selects a pre-determined number of top-ranked network resources to generate the user-non-specific sub-set of content sources.

In some embodiments of the present technology, the machine learning algorithm used can be Pointwise Mutual Information (PMI) algorithm. Within these embodiments of the present technology, the machine learning algorithm determines the user-non-specific sub-set of content sources based on the first sub-set of user-specific content sources. More specifically, the machine learning algorithm determines for each of the network resources within the first sub-set of user-specific content sources and each of the crawled potential content sources: (i) how often the pair has occurred together (were browsed together, appeared together as part of search results, etc) during a particular interaction; and (ii) how often a respective one of the network resources was interacted with. The machine learning algorithm then calculates a proportion of the number of occurrences together (as per (i)) to a multiplication of the individual values of occurrences of the respective network resources (as per (ii)).

For each of the network resources in the first sub-set of user-specific content sources, the machine learning algorithm selects a pre-determined number of top-ranked resources determined by the PMI algorithm to generate the user-non-specific sub-set of content sources.

### Processing user-specific and user-non-specific subsets of content sources to generate the sub-set of recommended content sources

The content source determination module 316 then processes the first sub-set of user specific content sources and the second sub-set of user-non-specific content sources in order to generate the sub-set of recommended content sources.

In some embodiments of the present technology, the content source determination module 316 selects a pre-determined number of the content sources from the user-non-specific sub-set of content sources. In other embodiments of the present technology, the content source determination module 316 selects a pre-determined number of the content sources from the user-non-specific sub-set of content sources and a pre-determined number of content sources from the first sub-set of user-specific content sources. The content source determination module 316 can be configured to determine the respective numbers of the pre-determined content sources, considering that the larger the number selected from user-non-specific sub-set of content sources, the more content items recommendations from "new" sources the user 102 is likely to get. Conversely, the larger the number selected from first sub-set of user-specific content sources, the more content items recommendations from "known" sources (and therefore, more likely to be acceptable) the user 102 is likely to get

The recommendation server 312 further comprises a potentially-recommendable content items selection module 318 for analyzing the sub-set of recommended content sources to select a plurality of potentially-recommendable content items.

The selection of the content items from the so-selected content sources can be executed using one or more heuristics. For example, the content source selection module 116 selects a pre-defined number of content items (such as 2 content items, 5 content items, 10 content items, and the like) being associated with one or more: (i) most recent publication date, (ii) most visits during the past X number of days, (iii) being associated with a particular section of the given network resource (such as "most recent", "hot", etc).

The recommendation server 312 further comprises a content recommendation selection module 320 for executing a second machine learning algorithm module in order to select, from the plurality of potentially-recommendable content items, at least one recommended content item; the selection being made on the basis of the user-profile-vector.

How the content recommendation selection module 320 is implemented is not particularly limited. An example of the machine learning algorithm that can be used by the content recommendation selection module 320 is disclosed in a co-owned Russian Patent Application entitled: "METHOD AND APPARATUS FOR GENERATING A RECOMMENDED CONTENT LIST" and bearing an application number 2015136684 filed on August 22, 2015; content of which is incorporated herein by reference in its entirety.

Once the content recommendation selection module 320 generates the sub-set of content items for the given user 102, the content recommendation selection module 320 generates a recommended content message 152 and transmits same to the electronic device 104. When the electronic device 104 receives the recommended content message 152, the recommendation application 106 processes content thereof and displays the recommended content items on the recommendation interface 108. How the recommendation interface 108 is implemented is not particularly limited - the recommendation interface 108 depicted in Figure 2 can be used. As another example, the recommendation interface 108 can be implemented as disclosed in the co-owned Russian Patent Application entitled: "METHOD OF AND SYSTEM FOR INTERACTING WITH A CONTENT ELEMENT OF A CONTENT STREAM" and bearing an application number 2015141291 filed on September 29, 2015; content of which is incorporated herein by reference in its entirety.

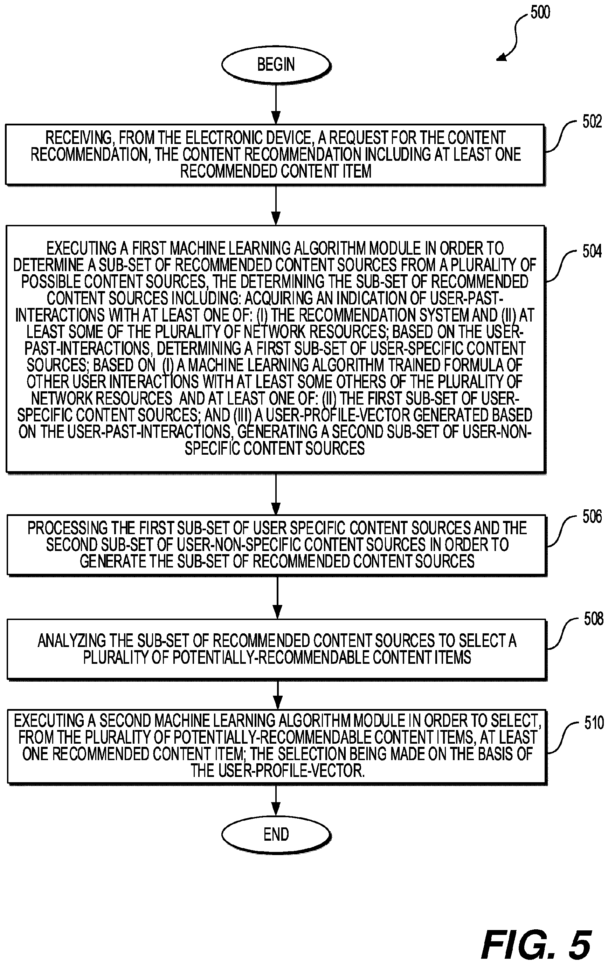

Given the architecture and examples provided herein above, it is possible to execute a method of generating a content recommendation for the user 170 of the electronic device 104. Figure 5 depicts a block diagram of a method 500, the method 500 executable in accordance with non-limiting embodiments of the present technology. The method 500 can be executed on the recommendation server 312 and, more specifically, using the content source determination module 316 and the potentially-recommendable content items selection module 318. For the purposes of the description to be presented herein below, it is assumed that the machine learning algorithm to be executed by the content source selection module 116 has been trained to determine a source suitability parameter based on training web site profiles generated with an associated plurality of training features at least some of which are of a same category as the plurality of features to be used during execution of the method 200.

### Step 502 - receiving, from the electronic device, a request for the content recommendation, the content recommendation including at least one recommended content item

The method 500 starts at step 502, where the content source selection module 116 receives, from the electronic device 104, the request for the content recommendation 150, the content recommendation including at least one recommended content item.

### Step 504 - executing a first machine learning algorithm module in order to determine a sub-set of recommended content sources from a plurality of possible content sources, the determining the sub-set of recommended content sources including: acquiring an indication of user-past-interactions with at least one of: (i) the recommendation system and (ii) at least some of the plurality of network resources; based on the user-past-interactions, determining a first sub-set of user-specific content sources; based on (i) a machine learning algorithm trained formula of other user interactions with at least some others of the plurality of network resources and at least one of: (ii) the first sub-set of user-specific content sources; and (iii) a user-profile-vector generated based on the user-past-interactions generating a second sub-set of user-non-specific content sources

At step 504, the content source selection module 116 executes a first machine learning algorithm module in order to determine a sub-set of recommended content sources from a plurality of possible content sources, the determining the sub-set of recommended content sources including: acquiring an indication of user-past-interactions with at least one of: (i) the recommendation system and (ii) at least some of the plurality of network resources; based on the user-past-interactions, determining a first sub-set of user-specific content sources; based on (i) a machine learning algorithm trained formula of other user interactions with at least some others of the plurality of network resources; and at least one of: (ii) the first sub-set of user-specific content sources; and (iii) a user-profile-vector generated based on the user-past-interactions, generating a second sub-set of user-non-specific content sources.

In some embodiment of the method 500, the determining the first sub-set of user-specific content sources comprises applying an SVD algorithm. Within these embodiments, the determining the first sub-set of user-specific content sources is based on: (i) the machine learning algorithm trained formula of other user interactions with at least some others of the plurality of network resources; and (ii) the user-profile-vector generated based on the user-past-interactions.

Within these embodiments of the method 500, the method 500 further comprises, prior to the receiving the request for the content recommendation, generating by the SVD algorithm a matrix of network resources events and users.

In other embodiments of the method 500, the determining the first sub-set of user-specific content sources comprises applying a PMI algorithm. In these embodiments of the method 500, the determining the first sub-set of user-specific content sources is based on: (i) the machine learning algorithm trained formula of other user interactions with at least some others of the plurality of network resources; and (ii) the first sub-set of user-specific content sources.

### Step 506 - processing the first sub-set of user specific content sources and the second sub-set of user-non-specific content sources in order to generate the sub-set of recommended content sources

At step 506, the content source selection module 116 processes the first sub-set of user specific content sources and the second sub-set of user-non-specific content sources in order to generate the sub-set of recommended content sources.

### Step 508 - analyzing the sub-set of recommended content sources to select a plurality of potentially-recommendable content items

At step 508, the content source selection module 116 analyzes the sub-set of recommended content sources to select a plurality of potentially-recommendable content items

### Step 510 - executing a second machine learning algorithm module in order to select, from the plurality of potentially-recommendable content items, at least one recommended content item; the selection being made on the basis of the user-profile-vector

At step 510, the comprises a potentially-recommendable content items selection module 318 executes a second machine learning algorithm module in order to select, from the plurality of potentially-recommendable content items, at least one recommended content item; the selection being made on the basis of the user-profile-vector.

In some embodiments of the method 500, the selection from the sub-set of recommended content sources the plurality of potentially-recommendable content items comprises determining a pre-defined number of most recent content items.

In other embodiments of the method 500, the selection from the sub-set of recommended content sources the plurality of potentially-recommendable content items comprises determining a pre-defined number of most popular content items.

In other embodiments of the method 500, the selection from the sub-set of recommended content sources is specific to a geographic region where the request for content recommendation was executed from.

In other embodiments of the method 500, the method 500 further comprises filtering the selected potentially-recommendable content items. In other embodiments of the method 500, the filtering is based on a language setting of the electronic device and a language setting of the content item.

Some embodiments of the present technology can lead to a technical effect of arising from the use of embodiments of the present technology, is the ability to "pre-qualify" potential sources of content recommendations in an "offline" mode ("offline" referring to processing prior to receiving the request for the content recommendation 150). In some embodiments of the present technology, a technical effect arises form an ability to pre-qualify network resources as sources of recommended content items when entering a new territory.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A method (400) of selecting a network resource (124, 126, 128) as a source of a content item (216, 218), the content item to be analyzed (216, 218) by a recommendation system (100) as part of a plurality of content items (216, 218) to generate a set of recommended content items (214) as a recommendation for a given user (102) of the recommendation system, the given user (102) being a given one from a plurality of users, the recommendation system being executed at a server (112) coupled to a communication network (110), the method comprising:
acquiring (402), by the server, an indication of the network resource;
receiving (404), by the server, a plurality of features associated with the network resource;
generating (406), by the server, a given network resource profile for the network resource, the given network resource profile being based on the plurality of features;
executing (408), by the server, a machine learning algorithm in order to, based on the given network resource profile, determine a source suitability parameter for the network resource, the source suitability parameter being indicative of the network resource being susceptible to publishing the content item that can be processed by the recommendation system,
selecting (410) at least one content item from the network resource if the source suitability parameter is determined to be above a pre-determined threshold, the at least one content item for submitting to the recommendation system for processing.

2. The method of claim 1, wherein:
the machine learning algorithm having been trained, prior to said acquiring, to determine the source suitability parameter based on training web site profiles generated with an associated plurality of training features at least some of which are of a same category as the plurality of features.

3. The method of any one claims 1 to 2, wherein the plurality of features includes at least an absolute feature and a relative feature.

4. The method of claim 3, wherein the absolute feature and the relative feature are base features and wherein the method further comprises:
generating at least one derivative feature based on at least one of the absolute feature and the relative feature; and wherein
the given web site profile is further based on the at least one derivative feature.

5. The method of any one of claims 1 to 4, wherein the plurality of features includes an indication of a proportion of visit sources to the network resource.

6. The method of any one of claims 1 to 4, wherein the plurality of features includes at least one relative feature selected from: hits per visit (HPV); sessions per visit (SPV); dated-pages per visit (DPV); home page per visit (MPV); time spent on the network resource (MTIME); last domain per session (LPS); first domain per session (FPS); hits per session (HPS); visits per user (VPU); hits per user (HPU); sessions per user (SPU); dated-pages per hit (DPH); home pages per hit (MPH); and an indication of a visit source being one of: direct access visit-source (TT_GR); search engine visit-source (TT_SE); social network visit-source (TT_SN); electronic message visit-source (TT_IM); URL-condenser visit-source (TT_US); and ad-platform visit-source (TT_AD).

7. The method of any one of claims 1 to 4, wherein the plurality of features includes at least one of: a number of users visiting the network resource per time interval, number of visits per time interval, number of transitions within various web pages within the network resource per time interval, and a number of unique sessions with the network resource per time interval.

8. The method of any one of claims 1 to 7, wherein the plurality of features is a subset of all possible features, the method further comprising executing a feature selection to define the subset.

9. The method of claim 8, wherein the subset of all possible features consists of:
at least one of: a proportion of a landing page of the network resource visits within an initial transition to the network resource within a session and a proportion of the landing page visits during transitions within the network resource;
at least one of: a proportion of a web page associated with an URL containing a date being a first page visited within the initial transition to the network resource and a proportion of the web pages within the network resource visited during the session, the web pages being associated with an URL containing a date;
a proportionate profile of visit sources for the network resource, the visit sources being selected from: search engine/social networks/mail and messenger application/URL condensers/direct visits; and
a proportion of session where the network resource was last in the session.

10. The method of any one of claims 1 to 9, wherein the source suitability parameter is one of a suitable and non-suitable.

11. The method of claim 10, wherein the source suitability parameter is determined using at least one of: a logistical regression analysis; naive Bayes algorithm; k-nearest neighbor algorithm; random forest algorithm; and hard voting algorithm.

12. The method of any one of claims 1 to 11, wherein said selecting is executed in response to a request from the given user for a recommendation.

13. A server (112) comprising:
a data storage medium (118);
a network interface configured for communication over a communication network (110);
a processor (114) operationally coupled to the data storage medium and the network interface, the processor being configured to:
acquire an indication of the network resource (124, 126, 128), the network resource to be processed to determine its suitability as a source of a content item (216, 218), the content item to be analyzed by a recommendation system (100) as part of a plurality of content items (216, 218) to generate a set of recommended content items (214) as a recommendation for a given user (102) of the recommendation system, the given user (102) being a given one of a plurality of users;
receive a plurality of features associated with the network resource;
generate a given network resource profile for the network resource, the given network resource profile being based on the plurality of features;
execute a machine learning algorithm (116) in order to, based on the given network resource profile, determine a source suitability parameter for the network resource, the source suitability parameter being indicative of the network resource being susceptible to publishing the content item that can be processed by the recommendation system,
select (115) at least one content item from the network resource if the source suitability parameter is determined to be above a pre-determined threshold, the at least one content item for submitting to the recommendation system for processing.

14. The server of claim 13, wherein:
the machine learning algorithm has been trained, prior to said acquiring, to determine the source suitability parameter based on training web site profiles generated with an associated plurality of training features at least some of which are of a same category as the plurality of features.

15. The server of any one of claims 13 to 14, wherein the plurality of features includes at least an absolute feature and a relative feature.
